# EUROPÄISCHE PATENTSCHRIFT

(11) **EP 2 241 024 B1**
(45) Veröffentlichungstag und Bekanntmachung des Hinweises auf die Patenterteilung: **23.01.2013**
(21) Anmeldenummer: 08863528.9
(22) Anmeldetag: 21.10.2008
(51) Int. Cl.: H04B 7/08

(54) **VERFAHREN ZUR VERBESSERUNG DES EMPFANGS SOWIE EMPFANGSSYSTEM**
METHOD FOR IMPROVING RECEPTION AND RECEPTION SYSTEM
PROCÉDÉ POUR AMÉLIORER LA RÉCEPTION ET SYSTÈME DE RÉCEPTION

(30) Priorität: 20.12.2007 DE 102007061739
(43) Veröffentlichungstag der Anmeldung: 20.10.2010
(73) Patentinhaber: Robert Bosch GmbH, 70442 Stuttgart (DE)
(72) Erfinder: SCHANO, Thomas, 31180 Giesen (DE)
(86) Internationale Anmeldenummer: PCT/EP2008/064182
(87) Internationale Veröffentlichungsnummer: WO 2009/080386

(56) Entgegenhaltungen:
- EP-A- 1 056 221
- EP-A- 1 469 614
- WO-A-2006/069858
- US-A1- 2007 165 735
- US-B1- 6 522 642

## Beschreibung

### Stand der Technik

Die Erfindung geht aus von einem Verfahren zur Verbesserung des Empfangs in einem Empfangssystem mit mehreren Antennen, insbesondere für den Diversity-Betrieb, wobei die Antennensignale der mehreren Antennen zusammengefasst über ein gemeinsames Medium übertragen werden. Gegenstand der Erfindung ist auch ein Empfangssystem.

Aus der US 2007/0165735 A1 ist ein Verfahren bekannt, bei dem bei einem Empfangssystem mit mehreren Antennen die Empfangssignale der Antennen zusammengefasst und über ein gemeinsames Medium zu einem Empfänger übertragen werden.

Aus der WO 2006/069858 A1 ist eine Antennendiversity-Einrichtung bekannt, bei der Empfangssignale mehrerer Antennen in der Frequenz so umgesetzt werden, dass die Empfangsbänder der einzelnen Antennen bezüglich ihres Frequenzspektrums nebeneinander zu liegen kommen und über ein gemeinsames Übertragungsmedium, insbesondere ein Koaxialkabel übertragen werden können. Empfangsseitig werden die einzelnen Antennensignale über Filter wieder voneinander getrennt, in der Frequenz umgesetzt und unterschiedlichen Empfangseinheiten zugeführt.

Antennendiversity-Systeme verbessern die Leistungsfähigkeit eines Sende- /Empfangs-Systems, indem sie auf verschiedenen Wegen ausgebreiteten Signale gewinnbringend miteinander kombinieren. Die Gemeinsamkeit aller Systeme ist somit die Ausnutzung verschiedener Signalwege, auch wenn diese sich nur durch wenige Zentimeter auseinander liegende Antennenfußpunkte kennzeichnen. Schaltdiversity-Systeme benötigen hierfür getrennte Signalwege bis zu einem Umschalter. Phasendiversity-Systeme kombinieren unterschiedliche Empfangssysteme, indem sie die Empfangssignale durch rechnerische Methoden so überlagern, dass ein Gewinn entsteht. Da die Signale der verschiedenen Antennen über verschiedene Wege an den Empfänger gelangen, haben die Signale unterschiedliche Laufzeiten und somit auch Phasen. In herkömmlichen Empfängern führen diese Überlagerungen mit verschiedenen Phasen zu teilweisen Auslöschungen.

### Offenbarung der Erfindung

### Vorteile der Erfindung

Mit den Maßnahmen des Anspruchs 1, d. h. einer empfangsseitigen Kanalschätzung zur Gewinnung eines zum Kanal inversen Filtermodells, das auf das zusammengefasste Antennensignal im Sinne einer Korrelationsmaximierung angewendet wird, lässt sich ein verbessertes Empfangssignal gewinnen, ohne dass die Antennensignale vor der Übertragung in der Frequenz umgesetzt und gefiltert werden müssen und im Empfänger eine getrennte Signalverarbeitung der einzelnen wieder ausgefilterten und frequenzumgesetzten Antennensignale durchgeführt werden muss.

Ein Vorteil der Erfindung ist darin begründet, dass die zusammengefassten Antennensignale empfangsseitig wie eine übliche Mehrwegeausbreitung behandelt werden, auf die eine gewinnbringende Korrelation angewendet wird.

Auf dem gesamten Signalweg, d. h. von den Antennen bis an den Demodulator sind bei Phasendiversity-Systemen alle Pfade mit ihren entsprechenden Laufzeitunterschieden vorhanden. Über Korrelationsverfahren kann man die Laufzeit und somit auch Phasenunterschiede der einzelnen Pfade schätzen. Bei einem System, wie es der WO 2006/069858 A1 zugrunde liegt, muss somit nach Vorliegen der Erfindung die Kreuzkorrelation zwischen den einzelnen Signal-Empfangs-Pfaden maximiert werden. Danach können die Pfade entsprechend dem aus der Korrelation ermittelten Maximum gewinnbringend addiert werden.

Um die einzelnen Pfade einer Mehrwegeausbreitung gewinnbringend zu addieren, wird mittels einer Kanalschätzung ein dem Kanal inverses Filtermodell gewonnen, das dann auf das empfangene Signal angewendet einen Gewinn erbringt. Da es aus Sicht des Empfängers egal ist, ob die verschiedenen Signale dadurch entstehen, dass irgendwelche Reflektionen im Signalpfad mehrere Empfangssignale erzeugen oder ob mehrere Empfangseinrichtungen (Antennen) entsprechende Signale liefern, werden erfindungsgemäß die verschiedenen Empfangspfade schon auf der Hochfrequenz- Ebene zusammengefasst, insbesondere addiert, über ein gemeinsames Übertragungsmedium übertragen und dann in einem insbesondere digitalen Empfänger die Signale der verschiedenen Antennen, wie eine herkömmliche Mehrwegeausbreitung behandelt.

Durch richtungsselektive Maßnahmen wird verhindert, dass relevante Signalanteile einer Antenne zumindest teilweise über mindestens eine andere Antenne wieder abgestrahlt werden.

Als richtungsselektive Maßnahme eignet sich ein Richtkoppler oder Zirkulator oder insbesondere jeweils ein sowieso vorgesehener Antennensignalverstärker zwischen einer Antenne und der Zusammenschaltung für die Übertragung über das gemeinsame Übertragungsmedium.

### Zeichnungen

Anhand der Zeichnungen werden Ausführungsformen der Erfindung näher erläutert. Es zeigen:
- Figur 1: ein Blockschaltbild eines erfindungsgemäßen Empfangssystem,
- Figur 2: ein Empfangssystem mit Richtungselementen in den Antennenzuleitungen,
- Figur 3: ein Empfangssystem mit Verstärkern in der Antennenzuleitung.

### Ausführungsformen der Erfindung

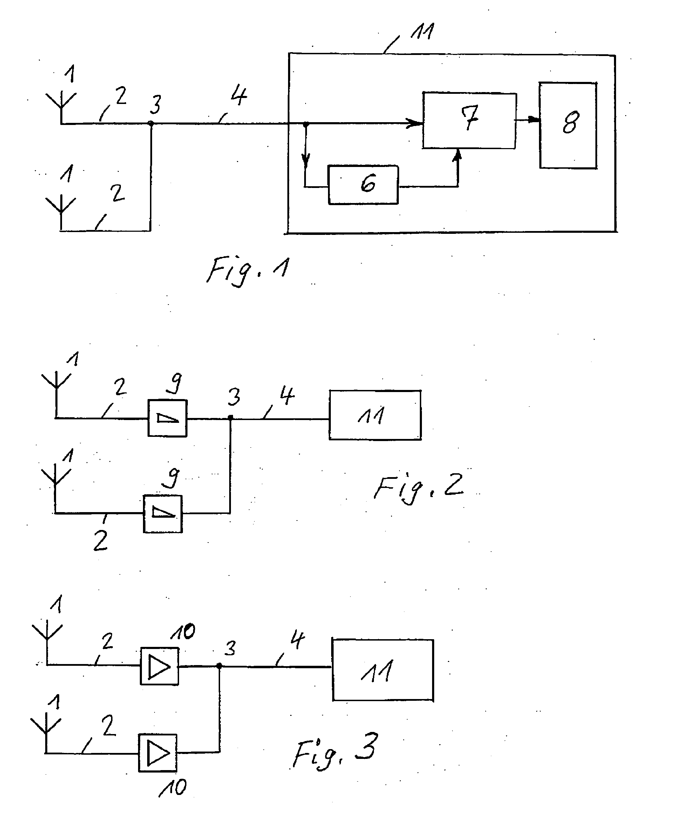

Wie in Figur 1 dargestellt, besteht das erfindungsgemäße Empfangssystem aus mehreren Antennen 1 für einen Diversity-Betrieb, deren Zuleitungen 2 in Punkt 3 zusammengefasst werden. Über ein gemeinsames Übertragungsmedium 4, z. B. ein Koaxialkabel oder nach entsprechender Wandlung ein Glasfaserkabel, werden die zusammengefassten Antennensignale der Antennen 1 zu einem gemeinsamen digitalen Empfänger 11 hin übertragen. Im Empfänger 11 ist ein herkömmlicher Kanalschätzer 6 angeordnet, der aufgrund von Korrelationen, insbesondere Kreuzkorrelationen, der gemeinsam übertragenen Antennensignale Parameter für die Ansteuerung eines Filters 7 berechnet. Das Filter 7 wird durch die im Kanalschätzer 6 ermittelten Parameter so eingestellt, dass das Filter 7 die Eigenschaften eines Übertragungskanals invers nachbildet (inverses Filtermodell). Die Erfindung beruht nun auf der Erkenntnis, dass es aus Sicht des Empfängers 11 egal ist, ob die verschiedenen Signalwege dadurch entstehen, dass irgendwelche Reflektionen im Signalpfad mehrere Empfangssignale erzeugen oder ob mehrere Antennen 1 entsprechende Empfangssignale liefern. Deshalb können erfindungsgemäß die verschiedenen Empfangssignale der Antennen 1 bereits auf Hochfrequenzebene zusammengefasst, bzw. hochfrequenzmäßig addiert werden, um nach der Übertragung über das Übertragungsmedium 4 in einem digitalen Empfänger 11 wie eine herkömmliche Mehrwegeausbreitung behandelt zu werden. Es muss hierbei die Kreuzkorrelation zwischen den einzelnen Antennensignalen maximiert werden. Danach können die Signale entsprechend dem aus der Korrelation ermittelten Maximum gewinnbringend zu einem verbesserten Antennensignal addiert werden. Diese digitale Addition findet im Decoder 8 statt. Die Zusammenfassung der Antennensignale, insbesondere deren Addition auf Hochfrequenzebene erfolgt bei der Erfindung ohne frequenzselektiven und/oder frequenzumsetzenden Maßnahmen vor oder bei der Zusammenfassung.

Über richtungsselektive Maßnahmen kann verhindert werden, dass relevante Signalanteile einer Antenne 1 zumindest teilweise über mindestens eine andere Antenne wieder abgestrahlt werden. Figur 2 zeigt solche richtungsselektiven Maßnahmen in Form von Zirkulatoren oder Richtkopplern 9 in den Signalwegen, d. h. Antennenzuleitungen 2, vor dem gemeinsamen Zusammenschaltpunkt 3.

Die Richtungsselektivität gemäß Figur 3 kann auch mit Verstärkern 10 in den Antennenzuleitungen 2 erzielt werden. Solche Antennensignalverstärker 10 sind meist sowieso erforderlich, so dass hierdurch kein Mehraufwand entsteht.

## Patentansprüche

1. Verfahren zur Verbesserung des Empfangs in einem Empfangssystem mit mehreren Antennen (1), insbesondere für einen Diversity-Betrieb, wobei Antennensignale der mehreren Antennen (1) zusammengefasst und über ein gemeinsames Übertragungsmedium (4) übertragen werden, **dadurch gekennzeichnet, dass** empfangsseitig mittels Kanalschätzung (6) ein zu einem Kanal inverses Filtermodell (7) gewonnen wird, das auf das zusammengefasste Antennensignal im Sinne einer Korrelationsmaximierung angewendet wird, dass die Zusammenfassung der Antennensignale und deren Addition auf Hochfrequenzebene ohne frequenzselektive und/oder frequenzumsetzende Maßnahmen vor oder bei der Zusammenfassung (3) durchgeführt wird, und dass richtungsselektive Maßnahmen (9, 10) derart angewendet werden, dass in Signalwegen (2) zwischen den mehreren Antennen (1) und der Zusammenschaltung (3) für die Übertragung über das gemeinsame Übertragungsmedium (4) jeweils ein richtungsselektives Element (9, 10) vorgesehen ist, um zu verhindern, dass relevante Signalanteile einer Antenne (1) zumindest teilweise über mindestens eine andere Antenne (1) wieder abgestrahlt werden.

2. Verfahren nach Anspruch 1, **dadurch gekennzeichnet, dass** die zusammengefassten Antennensignale empfangsseitig wie eine übliche Mehrwegeausbreitung behandelt werden, auf die gewinnbringende Korrelation angewendet wird.

3. Verfahren nach Anspruch 2, **dadurch gekennzeichnet, dass** als richtungsselektive Maßnahme die Eigenschaft eines Verstärkers (10) ausgenutzt wird, im Signalweg nur in eine Richtung ein Signal zu verstärken.

4. Empfangssystem mit mehreren Antennen (1), insbesondere für einen Diversity-Betrieb, die zusammen an ein gemeinsames Übertragungsmedium (4) angeschlossen sind und am empfangsseitigen Ende des Übertragungsmediums (4) ein Empfänger (11) mit einem Kanalschätzer (6) sowie einem Filter (7) angeschlossen ist, **dadurch gekennzeichnet, dass** das Filter ausgestaltet ist, einen Kanal in Abhängigkeit der Auswertung des Kanalschätzers (6) invers nachzubilden, um über eine Korrelationsmaximierung der einzelnen Antennensignale ein verbessertes Antennensignal zu gewinnen, wobei das System derart ausgeführt ist, dass eine Zusammenfassung der Antennensignale und deren Addition auf Hochfrequenzebene ohne frequenzselektive und/oder frequenzumsetzende Maßnahmen vor oder bei der Zusammenfassung (3) durchgeführt wird, und dass richtungsselektive Maßnahmen (9, 10) derart angewendet werden, dass in Signalwegen (2) zwischen den mehreren Antennen (1) und der Zusammenschaltung (3) für die Übertragung über das gemeinsame Übertragungsmedium (4) jeweils ein richtungsselektives Element (9, 10) vorgesehen ist, um zu verhindern, dass relevante Signalanteile einer Antenne (1) zumindest teilweise über mindestens eine andere Antenne (1) wieder abgestrahlt werden.

5. Empfangssystem nach Anspruch 4, **dadurch gekennzeichnet, dass** der Kanalschätzer (6) zusammen mit dem Filter (7) ausgebildet ist, die zusammengefassten Antennensignale wie eine übliche Mehrwegeausbreitung zu behandeln, auf die eine gewinnbringende Korrelation angewendet wird.

6. Empfangssystem nach Anspruch 4 oder 5, **dadurch gekennzeichnet, dass** als richtungsselektives Element ein Richtkoppler oder Zirkulator (9) vorgesehen ist.

7. Empfangssystem nach Anspruch 4 oder 5, **dadurch gekennzeichnet, dass** als richtungsselektives Element ein Antennensignalverstärker (10) vorgesehen ist.

## Claims

1. Method for improving the reception in a reception system having a plurality of antennas (1), particularly for a diversity mode, wherein antenna signals from the plurality of antennas (1) are combined and are transmitted by means of a common transmission medium (4), **characterized in that** the reception end uses channel estimation (6) to obtain a filter model (7) that is the inverse of a channel and that is applied to the combined antenna signal for the purpose of correlation maximization, **in that** the combination of the antenna signals and the addition thereof are performed at radio-frequency level without frequency-selective and/or frequency-converting measures before or during the combination (3), and **in that** directionally selective measures (9, 10) are applied such that signal paths (2) between the plurality of antennas (1) and the interconnection (3) for the transmission by means of the common transmission medium (4) each contain a directionally selective element (9, 10) in order to prevent relevant signal components from one antenna (1) being radiated again at least to some extent via at least one other antenna (1).

2. Method according to Claim 1, **characterized in that** the combined antenna signals are handled at the reception end in the manner of standard multipath propagation, to which productive correlation is applied.

3. Method according to Claim 2, **characterized in that** the directionally selective measure utilized is the property of an amplifier (10) to amplify a signal in the signal path in one direction only.

4. Reception system having a plurality of antennas (1), particularly for a diversity mode, which are connected to a common transmission medium (4) together, and the reception end of the transmission medium (4) has a receiver (11) with a channel estimator (6) and a filter (7) connected to it, **characterized in that** the filter is configured to inversely simulate a channel on the basis of the evaluation of the channel estimator (6) in order to obtain an improved antenna signal by means of correlation maximization for the individual antenna signals, wherein the system is configured such that combination of the antenna signals and the addition thereof are performed at radio-frequency level without frequency-selective and/or frequency-converting measures before or during the combination (3), and **in that** directionally selective measures (9, 10) are applied such that signal paths (2) between the plurality of antennas (1) and the interconnection (3) for the transmission by means of the common transmission medium (4) each contain a directionally selective element (9, 10) in order to prevent relevant signal components from one antenna (1) being radiated again at least to some extent via at least one other antenna (1).

5. Reception system according to Claim 4, **characterized in that** the channel estimator (6) together with the filter (7) is designed to handle the combined antenna signals in the manner of standard multipath propagation, to which productive correlation is applied.

6. Reception system according to Claim 4 or 5, **characterized in that** the directionally selective element provided is a directional coupler or circulator (9).

7. Reception system according to Claim 4 or 5, **characterized in that** the directionally selective element provided is an antenna signal amplifier (10).

## Revendications

1. Procédé pour améliorer la réception dans un système de réception comprenant une pluralité d'antennes (1), notamment pour un fonctionnement en diversité, dans lequel des signaux d'antennes de la pluralité d'antennes (1) sont combinés et transmis par l'intermédiaire d'un support de transmission commun (4), **caractérisé en ce que**, du côté réception, on obtient par inversion de canal (6) un modèle de filtre inverse de canal (7) qui est appliqué au signal d'antenne combiné au sens d'une maximisation de la corrélation, **en ce que** la combinaison des signaux d'antennes et leur addition sont effectuées au niveau des hautes fréquences sans mesures de sélectivité en fréquence et/ou de conversion de fréquence avant ou lors de la combinaison (3), et **en ce que** des mesures de sélectivité en direction (9, 10) sont appliquées en faisant en sorte qu'un élément sélectif en direction (9, 10) soit prévu sur les trajets de signaux (2) entre la pluralité d'antennes (1) et le circuit de combinaison (3) pour la transmission par l'intermédiaire du support de transmission commun (4), afin d'éviter que des composantes de signal propres à une antenne (1) soient au moins partiellement réémises par l'intermédiaire d'au moins une autre antenne (1).

2. Procédé selon la revendication 1, **caractérisé en ce que** les signaux d'antennes combinés sont traités du côté réception comme une propagation par trajets multiples ordinaire à laquelle est appliquée une corrélation utile.

3. Procédé selon la revendication 2, **caractérisé en ce qu'**on utilise en tant que mesure de sélectivité en direction la propriété d'un amplificateur (10) de n'amplifier un signal que dans une seule direction sur le trajet de signal.

4. Système de réception comportant une pluralité d'antennes (1), notamment pour un fonctionnement en diversité, qui sont reliées ensemble à un support de transmission commun (4) et dans lequel un récepteur (11) comportant un estimateur de canal (6) ainsi qu'un filtre (7) est relié à l'extrémité de réception du support de transmission (4), **caractérisé en ce que** le filtre est conçu pour reproduire de manière inverse un canal en fonction de l'évaluation faite par l'estimateur de canal (6) afin d'obtenir par une maximisation de la corrélation des signaux d'antennes individuels un signal d'antenne amélioré, dans lequel le système est réalisé de telle manière qu'une combinaison des signaux d'antennes et que leur addition sont effectuées au niveau des hautes fréquences sans mesures de sélectivité en fréquence et/ou de conversion de fréquence avant ou lors de la combinaison (3), et que des mesures de sélectivité en direction (9, 10) sont appliquées en faisant en sorte qu'un élément de sélectif en direction respectif (9, 10) soit prévu sur les trajets de signaux (2) entre la pluralité d'antennes (1) et le circuit de combinaison (3) pour la transmission par l'intermédiaire du support de transmission commun (4), afin d'éviter que des composantes de signal propres à une antenne (1) soient au moins partiellement réémises par l'intermédiaire d'au moins une autre antenne (1).

5. Système de réception selon la revendication 4, **caractérisé en ce que** l'estimateur de canal (6), en association avec le filtre (7), est conçu pour traiter les signaux d'antennes combinés comme une propagation par trajets multiples ordinaire à laquelle est appliquée une corrélation utile.

6. Système de réception selon la revendication 4 ou 5, **caractérisé en ce qu'**il est prévu en tant qu'élément sélectif en direction un coupleur directionnel ou un circulateur (9).

7. Système de réception selon la revendication 4 ou 5, **caractérisé en ce qu'**il est prévu en tant qu'élément sélectif en direction un amplificateur de signal d'antenne (10).
